# FASCICULE DE BREVET EUROPEEN

(11) **EP 2 785 518 B1**
(45) Date de publication et mention de la délivrance du brevet: **29.06.2016**
(21) Numéro de dépôt: 12794317.3
(22) Date de dépôt: 28.11.2012
(51) Int. Cl.: B29D 30/24

(54) **TAMBOUR D'ASSEMBLAGE POUR PNEUMATIQUE**
REIFENAUFBAUTROMMEL
TYRE BUILDING DRUM

(30) Priorité: 30.11.2011 FR 1160966
(43) Date de publication de la demande: 08.10.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: DENAVIT, Franck, F-63040 Clermont-Ferrand Cedex 9 (FR); RAVAT, Stéphane, F-63040 Clermont-Ferrand Cedex 9 (FR)
(74) Mandataire: Noel, Luminita
(86) Numéro de dépôt international: PCT/EP2012/073857
(87) Numéro de publication internationale: WO 2013/079544

(56) Documents cités:
- EP-A1- 1 847 380
- EP-A2- 0 634 266
- US-A- 4 229 246
- US-A1- 2004 194 892

## Description

L'invention concerne le domaine de la fabrication des pneumatiques, et plus particulièrement les tambours d'assemblage des pneumatiques dits autoporteurs.

La construction de ces pneumatiques se caractérise par le fait qu'ils comportent des profilés en caoutchouc de forte épaisseur disposés dans les flancs, et généralement placés entre la gomme d'étanchéité et la ou les nappes de renfort carcasse. Ces produits ont pour fonction, de supporter la charge lorsque la pression de l'air dans l'enveloppe ne permet plus d'assurer cette mission.

Du fait de cette disposition, la construction de ce type de pneumatique requière des précautions particulières pour assurer une jonction correcte entre les profilés, et pour éviter d'emprisonner de l'air entre les dits profilés, en particulier lorsqu'il est fait usage d'un tambour cylindrique.

En effet, lors de la pose des profilés de forte épaisseur à l'emplacement axial correspondant à la zone des flancs, on observe que le profil méridien servant de surface de réception à la nappe de renfort carcasse est relativement tourmenté. Ceci a pour effet de favoriser l'emprisonnement d'air entre la nappe de renfort carcasse et les profilés situés radialement en dessous.

Les publications EP 634 266 ou encore EP 1 847 380 divulguent des solutions aptes à résoudre le problème poser, et décrivent des tambours d'assemblage comportant des gorges disposées sur la surface de réception du tambour, et espacées axialement de manière à être positionnées sensiblement au droit de la zone de pose des profilés de forte épaisseur. De cette manière, en déterminant de façon appropriée la forme de la gorge, il devient possible d'obtenir après la pose des profilés de forte épaisseur, une surface de réception de la nappe de renfort carcasse sensiblement cylindrique. Le profilé de forte épaisseur épouse le profil de ladite gorge de telle manière que sa surface radialement extérieure soit sensiblement alignée avec la surface extérieure généralement cylindrique du tambour d'assemblage. La pose de la nappe de renfort carcasse est opérée sur une surface cylindrique exempte de zones susceptibles d'enfermer de l'air.

La pose des profilés suivants s'effectue généralement après avoir porté le tambour à un second diamètre de pose. On s'arrange alors pour que, à l'issue de cette première conformation, ainsi du reste que des suivantes, la surface radialement externe du profilé de forte épaisseur demeure alignée avec la surface de réception du tambour.

Plus particulièrement, la publication EP 1 847 380 décrit un tambour dans lequel, lorsque le tambour est amené à un premier diamètre de pose, un moyen mécanique écarte un corps élastique du fond de la gorge de manière à aligner la surface radialement externe du corps élastique avec la surface de réception du tambour d'assemblage.

Lorsque le tambour est placé à un second diamètre de pose, supérieur au premier diamètre de pose, et que le corps élastique est plaqué contre le fond de la gorge, la surface radialement externe du profilé de forte épaisseur forme avec la surface du tambour une surface généralement cylindrique.

Ce type de tambour d'assemblage répond donc de manière tout à fait satisfaisante au problème de la pose des profilés de forte épaisseur employés pour la fabrication des pneumatiques dits autoporteurs.

On observe néanmoins que les tambours d'assemblage requis pour fabriquer une dimension de pneumatique autoporteur, ne diffèrent des tambours utilisés pour la fabrication des pneumatiques classiques non autoporteurs que par la présence de la gorge décrite ci-dessus.

Il peut donc s'avérer utile de proposer un tambour d'assemblage mixte pouvant aussi bien servir, selon le besoin de fabrication, à réaliser des pneumatiques autoporteurs ou des pneumatiques non autoporteurs de même dimension ou de dimensions proches.

L'invention a pour objet de proposer une solution à ce problème et représente donc un perfectionnement du tambour décrit dans la publication EP 1 847 380.

Le tambour d'assemblage selon l'invention comme défini dans la revendication 1, est un tambour à diamètre variable destiné à la fabrication d'une ébauche de pneumatique. Ce tambour possède une surface de réception généralement cylindrique formée de secteurs mobiles radialement et portant des éléments dont la partie radialement externe constitue la surface de réception, la surface de réception comprenant au moins une gorge circulaire contenant un manchon circonférentiel élastique qui est écarté radialement du fond de la gorge par des poussoirs, mobiles radialement par rapport aux secteurs mobiles, de manière à aligner la surface radialement externe du manchon avec la surface de réception lorsque le tambour est amené à un premier diamètre de pose, et qui vient se plaquer contre le fond de la gorge sous l'effet des tensions élastiques circonférentielles, lorsque le tambour est placé à un diamètre de pose supérieur audit premier diamètre de pose. Ce tambour se caractérise en ce que des verrous débrayables sont aptes à maintenir les poussoirs dans la position dans laquelle la surface radialement externe du manchon est alignée avec la surface de réception quel que soit le diamètre auquel ladite surface de réception est amenée

De la sorte, lorsque les verrous sont débrayés en position ouverte, le manchon élastique, sous l'action des poussoirs, vient se mettre au niveau de la surface de réception pour la seule position correspondant au premier diamètre du tambour et épouse le fond de la gorge aux diamètres supérieurs, autorisant la fabrication des pneumatiques dits autoporteurs comportant des profilés de forte épaisseur. Et, en position fermée ou verrouillée, les manchons restent au niveau de la surface de réception quel que soit le diamètre, autorisant la fabrication de pneumatiques standards ne comportant pas lesdits profilés. Le même tambour est donc adapté pour les deux usages. Des formes préferentielles de l'invention sont définies dans les revendications 2 à 11.

Avantageusement, le tambour d'assemblage peut comprendre deux gorges disposées axialement de part et d'autre de la méridienne du tambour, de manière à loger les profilés de forte épaisseur destinés à soutenir chacun des deux flancs du pneumatique.

En position dite fermée, les verrous débrayables empêchent les poussoirs de se mouvoir radialement par rapport aux secteurs mobiles, sur lesquels lesdits poussoirs sont montés, et en position dite ouverte, les verrous autorisent le coulissement radial des poussoirs par rapport aux secteurs mobiles sur lequel lesdits poussoirs sont montés.

Selon le type de construction du tambour d'assemblage il peut s'avérer intéressant de concevoir un poussoir comprenant une tige coulissant radialement par rapport au secteur mobile sur lequel ledit poussoir est monté, et dont la longueur dans la direction radiale est ajustée de manière à ce que, lorsque le tambour est amené à son premier diamètre de pose, une première extrémité de la tige vient en butée sur une surface cylindrique de diamètre constant et l'autre extrémité repousse le manchon élastique de sorte que la surface radialement externe dudit manchon soit au même diamètre que le diamètre de pose du tambour.

Pour améliorer la résistance radiale de la surface de pose au niveau des manchons élastiques il peut apparaître avantageux de prévoir dans la partie du poussoir soutenant le manchon élastique, des projections axiales aptes à supporter le manchon élastique. Ces projections axiales ont utilement une longueur axiale sensiblement égale à la largeur de la gorge.

Toujours selon le type de construction du tambour d'assemblage, le verrou pénètre axialement dans un logement aménagé sur la tige du poussoir de manière à maintenir ledit poussoir en position fermée.

Lorsque le tambour d'assemblage est du type, comprenant un mécanisme apte à modifier la position axiale des secteurs mobiles entre deux positions extrémales, il peut s'avérer judicieux de faire en sorte que la mise en butée des secteurs mobiles à chacune des positions axiales extrémales provoque respectivement l'ouverture ou la fermeture des verrous.

Enfin il peut être utile de prévoir un poussoir à bille, montée dans chacun des secteurs mobiles, apte à maintenir le verrou monté sur ledit secteur en position ouverte ou fermée de manière à empêcher ledit verrou de se mouvoir axialement par rapport à la tige du poussoir lorsque les secteurs mobiles se déplacent radialement ou axialement.

La description qui suit, qui s'appuie sur un exemple de mise en oeuvre de l'invention, et comprend les figures 1 à 5 dans lesquelles :
- la figure 1 représente une vue en écorché d'un demi secteur d'un tambour selon l'invention,
- la figure 2 représente une vue en coupe de la même partie du tambour,
- les figures 3a et 3b représentent des vues en perspective du verrou et de la tige du poussoir,
- les figures 4a et 4b représentent les vues en écorché du manchon élastique dans ses deux positions,
- les figures 5a et 5b représentent un cas particulier de la mise en oeuvre de l'invention, lorsque le tambour comprend un mécanisme apte à modifier la distance axiale entre les gorges destinées à recevoir les anneaux de renforcement des bourrelets du pneumatique.

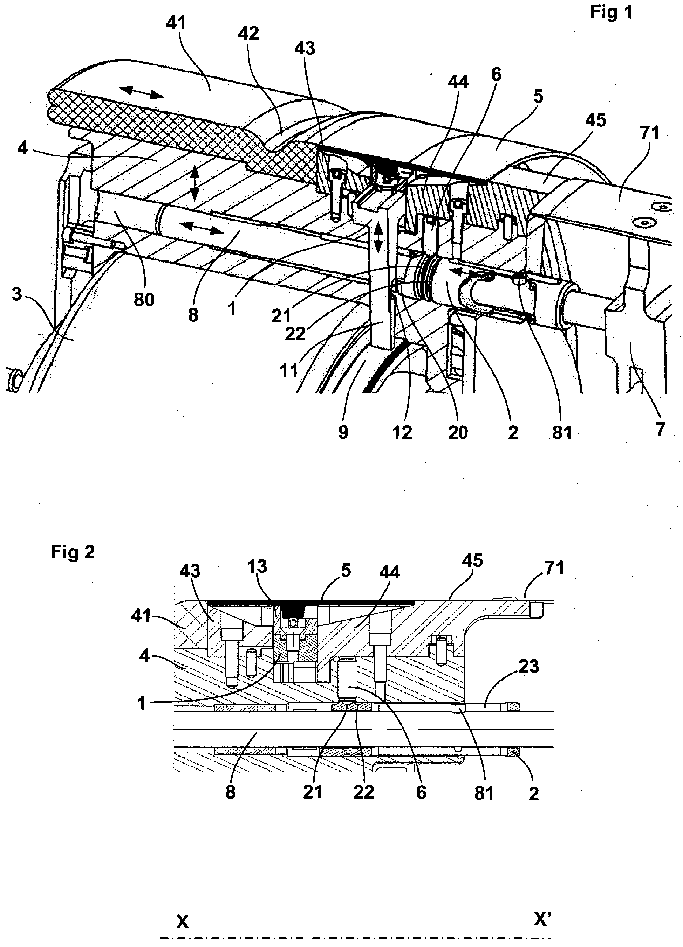

Le tambour d'assemblage représenté à la figure 1 comprend un premier ensemble de secteurs cylindriques 4, mobiles radialement sous l'action d'une vessie annulaire 3, et répartis circonférentiellement autour d'un axe moteur (non représenté). Un deuxième ensemble identique de secteurs mobiles (non représentés), symétriques par rapport à un plan méridien du secteur 4 illustré à la figure 1, sont également répartis circonférentiellement autour de l'axe moteur. Ces deux sous-ensembles de secteurs mobiles constituent l'ensemble des secteurs mobiles du tambour d'assemblage.

Chaque paire de secteurs mobiles, formée par les deux secteurs mobiles symétriques par rapport au plan méridien, supporte une partie centrale 7 par l'intermédiaire d'un axe 8 circulant librement dans un conduit axial 80 pratiqué dans chacun des secteurs mobiles 4.

Ces secteurs mobiles 4 ainsi que la partie centrale 7 supportent des éléments, 41, 42, 5, 45, 7 dont la partie radiale externe forme la surface de réception de forme généralement cylindrique.

La mise en rotation de l'arbre moteur commande la mise en rotation de la surface de réception autour d'un axe se confondant avec l'axe de l'arbre porteur.

L'expansion radiale des vessies annulaires 3 provoque la montée dans la direction radiale de l'ensemble des secteurs mobiles et l'accroissement du diamètre de la surface de réception depuis un premier diamètre de pose, correspondant en règle générale au diamètre de pose de la nappe de renfort carcasse, jusqu'à un deuxième, voire un troisième diamètre de pose, correspondant aux diamètre de pose des profilés tels que les profilés de flanc ou de support des nappes de renfort sommet.

Dans le cas de l'exemple servant à la présente description, les secteurs mobiles supportent une membrane annulaire de retournement 41 comprenant une gorge cylindrique 42 destinée à recevoir et à maintenir en position les anneaux de renfort des bourrelets du pneumatique en cours d'assemblage. La partie centrale supporte une tuile 71, généralement rigide, et de forme cylindrique. La face radialement externe de l'ensemble des tuiles 71, forme la partie centrale de la surface de réception.

Un manchon élastique 5 est disposé entre la gorge de réception des anneaux de renforcement bourrelets 42 et la partie centrale 71. Le manchon élastique 5 a une tension circonférentielle adaptée de manière à lui permettre d'épouser la forme d'une gorge circonférentielle, dont la forme est conférée par les faces radialement externes des éléments 43 et 44 fixés sur les secteurs mobiles 4.

Chaque secteur mobile 4 comprend un poussoir 1, mobile radialement par rapport audit secteur, et disposé entre les éléments 43 et 44 sur lequel s'appuie la partie centrale radialement interne du manchon élastique 5. Une tige 11 prolonge le poussoir dans la direction radialement interne et prend appui sur une surface cylindrique 9, portée par l'axe moteur, et de diamètre constant.

La longueur radiale de la tige 11 est ajustée de sorte que, lorsque la surface de réception est positionnée à son plus petit diamètre, la tige prend appui sur la surface 9 et soulève dans la direction radialement externe le manchon élastique de manière à ce que la surface radialement extérieure du manchon 5 soit sensiblement au même diamètre que la surface de réception.

Lorsque le tambour est porté à un diamètre supérieur la tige décolle de la surface 9, et le poussoir 1 est repoussé radialement dans le fond de l'intervalle formé par les éléments 43 et 44 sous l'effet des forces élastiques internes du manchon élastique 5. Il en résulte l'apparition d'une gorge circulaire disposée entre la gorge de réception des anneaux de renfort du bourrelet et la partie centrale, destinée à recevoir les profilés de forte épaisseur utilisés pour la construction des pneumatiques dits autoporteurs.

Ces principes sont également décrits dans la publication EP 1 847 380.

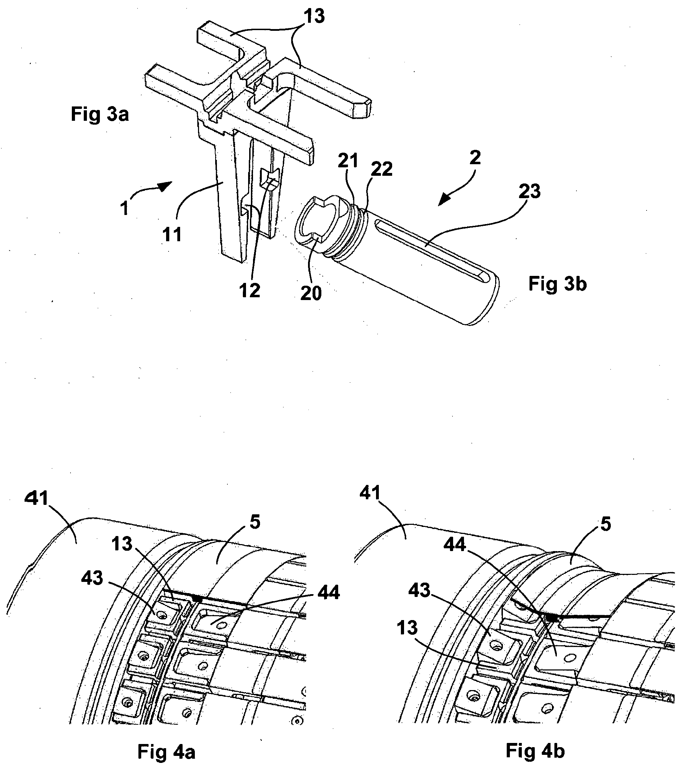

L'objet de la présente invention s'en distingue toutefois en ce qu'un verrou 2 collabore avec la tige 11 du poussoir 1 de manière à bloquer ou à libérer le mouvement axial du poussoir par rapport au secteur mobile 4 sur lequel ledit poussoir est monté. Le verrou 2 est monté à coulissement dans la direction axiale sur l'axe 8. En référence aux figures 3a et 3b, une des extrémités axiale 20 du verrou, agissant comme un pêne, peut pénétrer dans un logement 12 pratiqué dans la tige 11 et dont la fonction est similaire à celle d'une gâche.

Lorsque le verrou est placé en position fermée, c'est dire lorsque l'extrémité 20 pénètre dans le logement 12, le poussoir 1 est immobilisé en translation radiale par rapport au secteur mobile 4, et lorsque l'extrémité 20 est retirée du logement 12, le poussoir 21 retrouve sa mobilité radiale.

On s'arrange alors pour positionner le logement 12 à une distance axiale adaptée de sorte que, lorsque le verrou 2 est engagé dans le logement 12 de la tige 11, le poussoir 1 amène la surface radialement externe du manchon élastique 5 au même diamètre que la surface de réception du tambour. Il en résulte que la montée de la surface de pose à des diamètres supérieurs au premier diamètre de pose n'aura pas pour effet de ramener le manchon élastique en fond de gorge, et que la surface radialement externe de ce dernier restera alignée avec la surface de réception, quel que soit le diamètre auquel le tambour d'assemblage est porté.

Le tambour peut alors être utilisé pour l'assemblage de pneumatiques standards ne comportant pas de produits de forte épaisseur disposés radialement sous la nappe de renfort carcasse.

Les figures 4a et 4b permettent de visualiser le manchon 5 dans ses deux positions. La figure 4a représente le manchon aligné avec la surface de réception généralement cylindrique du tambour d'assemblage, et la figure 4b représente le manchon reposant sur le fond de la gorge circonférentielle formée par l'ensemble des éléments 43 et 44 placés sur chacun des secteurs mobiles 4.

Pour améliorer la rigidité de la portion de surface de réception formée par le manchon, il est possible de disposer à l'extrémité radialement externe du poussoir des extensions axiales rigides s'étendant sur tout ou partie de la gorge formée par les éléments 43 et 44. De la sorte, lorsque le tambour d'assemblage est utilisé pour la fabrication de pneumatiques standards, les efforts radiaux engendrés par la tension élastique des profilés et des rouletages des profilés en cours d'assemblage sont mieux contenus et ne provoquent pas de modifications géométriques de la surface de pose au droit du manchon élastique 5.

Un autre perfectionnement consiste à tirer profit de la cinématique particulière de certains tambour d'assemblage présentant la caractéristique de comporter des moyens (46) aptes à faire varier la position axiale des ensembles formés des éléments mobiles 4 et des vessies 3, la partie centrale restant dans une position axiale fixe. Ces moyens permettent de faire varier la distance entre les gorges 42 destinées à recevoir les anneaux de renforcement des bourrelets, et autorisent l'assemblage de pneumatiques de même diamètre mais présentant des constructions différentes.

On se sert des possibilités offertes par ce mécanisme pour commander le mouvement axial du verrou 2.

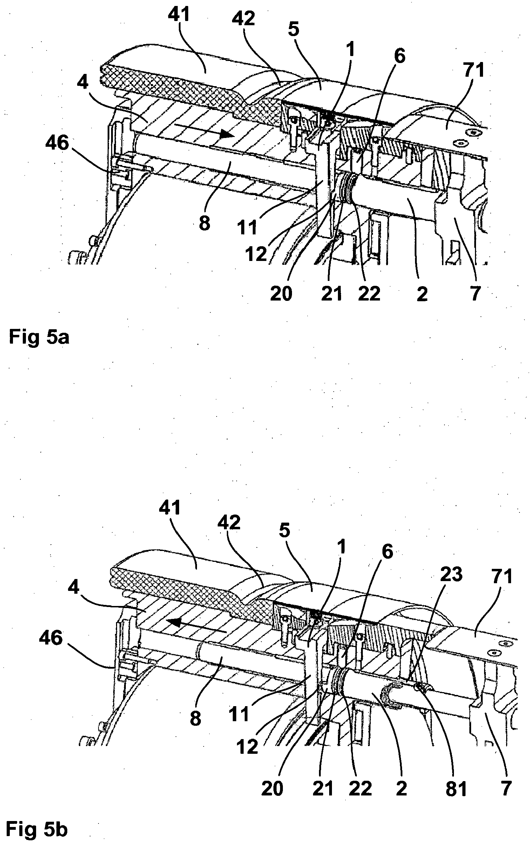

Lorsque les éléments mobiles sont ramenés dans une première position extrémale correspondant à la diminution maximale de la distance entre les gorges 42, comme cela est illustré à la figure 5a, la partie axialement interne du poussoir vient en butée contre la face correspondante du support central 7. La poursuite du rapprochement des gorges 42 force la pénétration de l'autre extrémité axiale 20 du verrou 2 dans le logement 12 de la tige 11 supportant le poussoir 1. Le verrou 1 est alors en position fermée et le manchon 5 est maintenu au niveau de la surface de réception quel que soit le diamètre auquel est portée cette dernière.

Pour désengager l'extrémité 12 du verrou du logement 12 il suffit de faire la manoeuvre inverse, et de porter à sa position extrémale maximale l'écartement entre les gorges 42 comme cela est illustré à la figure 5b. Un ergot 81 positionné axialement de manière judicieuse sur l'axe 8 autorise le mouvement axial du verrou 2 le long de l'axe 8 en circulant dans une saignée axiale 23 pratiquée sur une génératrice du verrou comme cela est illustré à la figure 3b. Lorsque le secteur mobile 4 arrive en fin de la course de son déplacement dirigé axialement vers l'extérieur, l'ergot 81 vient en butée sur la partie axialement interne de la saignée 23 et bloque la poursuite du mouvement axial du verrou 2 par rapport à la partie centrale 7. La poursuite du mouvement du secteur mobile désengage le verrou du logement 12 ce qui autorise le mouvement radial du poussoir 1 et la formation de la gorge au droit des éléments 43 et 44 sous l'effet des forces élastiques engendrées par le manchon 5.

Pour éviter des disfonctionnements, il peut s'avérer intéressant de maintenir le verrou 2 dans la position axiale désirée par rapport à la tige 11 et au secteur mobile 4, pendant les déplacements axiaux ou radiaux desdits secteurs mobiles.

A cet effet, on peut prévoir un poussoir à bille 6 montée dans le secteur mobile 4 coopérant avec des gorges 21 et 22 ou des logements placés sur le verrou 2. Lorsque le verrou est en position fermée, la bille se positionne dans la gorge 22 et maintien le verrou dans cette position. Et lorsque le verrou est en position ouverte, la bille se loge dans la gorge 21. Lorsque la bille est en position dans l'une ou l'autre des gorges, les petits efforts axiaux subis par le verrou lors du déplacement axial ou radial des secteurs mobiles ne modifient pas la position du verrou. Un effort réduit, engendré par les mouvements dans chacune des positions axiales extrémales des secteurs mobiles permet de faire passer la bille du poussoir à bille 6 d'une gorge à l'autre.

L'exemple servant de support à la présente description n'a pas de caractère limitatif, en particulier en ce qui concerne les positions respectives du verrou et des poussoirs par rapport au secteur mobile, et il va de soi que des effets mécaniques similaires peuvent être obtenus avec des éléments mécaniques ayant les mêmes fonctions et adaptés à des tambours d'assemblage de construction différente.

## Revendications

1. Tambour d'assemblage à diamètre variable, destiné à la fabrication d'une ébauche de pneumatique possédant une surface de réception généralement cylindrique formée de secteurs (4), mobiles radialement et portant des éléments constituant la surface de réception (41, 42, 5, 7), la surface de réception comprenant au moins une gorge circulaire (43, 44) contenant un manchon circonférentiel élastique (5) qui est écarté radialement du fond de la gorge par des poussoirs (1), mobiles radialement par rapport aux secteurs mobiles (4), de manière à aligner la surface radialement externe du manchon (5) avec la surface de réception lorsque le tambour est amené à un premier diamètre de pose, et qui vient se plaquer contre le fond de la gorge sous l'effet des tensions élastiques circonférentielles, lorsque le tambour est placé à un diamètre de pose supérieur audit premier diamètre de pose **caractérisé en ce que** des verrous débrayables (2) sont aptes à maintenir les poussoirs (1) dans la position dans laquelle la surface radialement externe du manchon (5) est alignée avec la surface de réception quel que soit le diamètre auquel ladite surface de réception est amenée.

2. Tambour d'assemblage selon la revendication 1, comprenant deux gorges disposées axialement de part et d'autre de la méridienne du tambour.

3. Tambour d'assemblage selon l'une des revendications 1 ou 2, dans lequel, en position dite fermée, les verrous débrayables (2) empêchent les poussoirs (1) de se mouvoir radialement par rapport aux secteurs mobiles (4), sur lesquels lesdits poussoirs (1) sont montés.

4. Tambour d'assemblage selon l'une des revendications 1 à 3, dans lequel en position dite ouverte, les verrous débrayables (2) autorisent le coulissement radial des poussoirs (1) par rapport aux secteurs mobiles (4) sur lequel lesdits poussoirs (1) sont montés.

5. Tambour d'assemblage selon l'une des revendications 1 à 4, dans lequel chaque poussoir (1) comprend une tige (11) coulissant radialement par rapport au secteur mobile (4) sur lequel ledit poussoir (1) est monté, et dont la longueur dans la direction radiale est ajustée de manière à ce que, lorsque le tambour est amené à son premier diamètre de pose, une première extrémité de la tige vient en butée sur une surface cylindrique (9) de diamètre constant et l'autre extrémité repousse le manchon élastique (5) de sorte que la surface radialement externe dudit manchon (5) soit au même diamètre que le diamètre de pose du tambour.

6. Tambour d'assemblage selon la revendication 5, dans lequel la partie du poussoir soutenant le manchon élastique comprend des projections axiales (13) aptes à supporter le manchon élastique (5).

7. Tambour d'assemblage selon la revendication 6, dans lequel les projections axiales (13) ont une longueur axiale sensiblement égale à la largeur de la gorge.

8. Tambour d'assemblage selon l'une des revendications 5 à 7, dans lequel le verrou (2) pénètre axialement dans un logement (12) aménagé sur la tige (11) du poussoir (1) de manière à maintenir ledit poussoir (1) en position fermée.

9. Tambour d'assemblage selon l'une des revendications 1 à 8, comprenant en outre un mécanisme (46) apte à modifier la position axiale des secteurs mobiles (4) entre deux positions extrémales.

10. Tambour d'assemblage selon la revendication 9, dans lequel la mise en butée des secteurs mobiles (4) à chacune des positions axiales extrémales provoque respectivement l'ouverture ou la fermeture des verrous (2).

11. Tambour d'assemblage selon la revendication 1 ou 10, dans lequel un poussoir à bille (6), montée dans chacun des secteurs mobiles (4), maintien le verrou (2) monté sur ledit secteur (4) en position ouverte ou fermée de manière à empêcher ledit verrou (2) de se mouvoir axialement par rapport à la tige (11) du poussoir (1) lorsque les secteurs mobiles (4) se déplacent radialement ou axialement.

## Patentansprüche

1. Montagetrommel mit variablem Durchmesser, welche zur Herstellung eines Reifenrohlings vorgesehen ist, welche eine im allgemeinen zylindrische Aufnahmefläche besitzt, welche aus Segmenten (4) gebildet wird, die radial beweglich sind und die Aufnahmefläche (41, 42, 5, 7) bildende Elemente trägt, wobei die Aufnahmefläche mindestens eine kreisförmige Nut (43, 44) aufweist, welche eine elastische, über den Umfang verlaufende Hülse (5) enthält, welche vom Boden der Nut durch Stößel (1) radial beabstandet wird, welche radial in Bezug auf die beweglichen Segmente (4) beweglich sind, um die äußere Fläche der Hülse (5) radial mit der Aufnahmefläche auszurichten, wenn die Trommel auf einen ersten Auflagedurchmesser gebracht ist, und welche unter der Einwirkung der umfänglichen elastischen Spannungen am Boden der Nut anliegt, wenn die Trommel auf einen Auflagedurchmesser gebracht ist, welcher größer als der erste Auflagedurchmesser ist, **dadurch gekennzeichnet, dass** entriegelbare Riegel (2) geeignet sind, die Stößel (1) in der Position festzuhalten, in welcher die radial äußere Fläche der Hülse (5) mit der Aufnahmefläche ausgerichtet ist, unabhängig davon auf welchen Durchmesser die Aufnahmefläche gebracht ist.

2. Montagetrommel nach Anspruch 1, aufweisend zwei Nuten, welche axial beiderseits der Mittellinie der Trommel angeordnet sind.

3. Montagetrommel nach einem der Ansprüche 1 oder 2, bei welcher die entriegelbaren Riegel (2) in so genannter geschlossener Position die Stößel (1) daran hindern, sich radial in Bezug auf die beweglichen Segmente (4), auf welchen die Stößel (1) montiert sind, zu bewegen.

4. Montagetrommel nach einem der Ansprüche 1 bis 3, bei welcher die entriegelbaren Riegel (2) in so genannter geöffneter Position es den Stößeln (1) ermöglichen, radial in Bezug auf die beweglichen Segmente (4), auf welchen die Stößel (1) montiert sind, zu gleiten.

5. Montagetrommel nach einem der Ansprüche 1 bis 4, bei welcher jeder Stößel (1) eine Stange (11) aufweist, welche radial in Bezug auf das bewegliche Segment (4), auf welchem der Stößel (1) montiert ist, gleitet, und deren Länge in der radialen Richtung so eingestellt ist, dass, wenn die Trommel auf ihren ersten Auflagedurchmesser gebracht ist, ein erstes Ende der Stange an einer zylindrischen Fläche (9) mit konstantem Durchmesser in Anschlag gelangt und das andere Ende derartig auf die elastische Hülse (5) drückt, dass die radial äußere Fläche der Hülse (5) auf demselben Durchmesser ist wie der Auflagedurchmesser der Trommel.

6. Montagetrommel nach Anspruch 5, bei welcher der die elastische Hülse tragende Abschnitt des Stößels axiale Vorsprünge (13) aufweist, welche geeignet sind, die elastische Hülse (5) zu tragen.

7. Montagetrommel nach Anspruch 6, bei welcher die axialen Vorsprünge (13) eine axiale Länge besitzen, welche im Wesentlichen gleich der Breite der Nut ist.

8. Montagetrommel nach einem der Ansprüche 5 bis 7, bei welcher der Riegel (2) axial in eine, in der Stange (11) des Stößels (1) eingebrachte Aufnahme (12) derartig eindringt, dass der Stößel (1) in geschlossener Position festgehalten wird.

9. Montagetrommel nach einem der Ansprüche 1 bis 8, welche außerdem einen Mechanismus (46) aufweist, welcher geeignet ist, die axiale Position der beweglichen Segmente (4) zwischen zwei Extrempositionen zu modifizieren.

10. Montagetrommel nach Anspruch 9, bei welcher das Anlegen der beweglichen Segmente (4) in jede der axialen Extrempositionen jeweils das Öffnen oder Schließen der Riegel (2) hervorruft.

11. Montagetrommel nach Anspruch 1 oder 10, bei welcher ein Kugelstößel (6), welcher in jedem der beweglichen Segmente (4) montiert ist, den an dem Segment (4) montierten Riegel (2) in geöffneter oder geschlossener Position derartig festhält, dass der Riegel (2) daran gehindert wird, sich axial in Bezug auf die Stange (11) des Stößels (1) zu bewegen, wenn sich die beweglichen Segmente (4) radial oder axial verlagern.

## Claims

1. Variable-diameter tyre-building drum intended for the manufacture of a green tyre having a generally cylindrical receiving surface formed of radially mobile sectors (4) and bearing elements that constitute the receiving surface (41, 42, 5, 7), the receiving surface comprising at least one circular groove (43, 44) containing an elastic circumferential sleeve (5) which is held radially away from the bottom of the groove by pushers (1) able to move radially with respect to the mobile sectors (4) so as to align the radially external surface of the sleeve (5) with the receiving surface when the drum is brought to a first laying diameter, and which is pressed against the bottom of the groove under the effect of circumferential elastic tensions when the drum is placed at a laying diameter greater than the said first laying diameter, **characterized in that** disengageable locks (2) are able to keep the pushers (1) in the position in which the radially external surface of the sleeve (5) is aligned with the receiving surface regardless of the diameter to which the said receiving surface is brought.

2. Tyre-building drum according to Claim 1, comprising two grooves arranged axially one on each side of the meridian of the drum.

3. Tyre-building drum according to one of Claims 1 and 2, in which, in a position referred to as the closed position, the disengageable locks (2) prevent the pushers (1) from moving radially relative to the mobile sectors (4) on which the said pushers (1) are mounted.

4. Tyre-building drum according to one of Claims 1 to 3, in which, in a position referred to as the open position, the disengageable locks (2) allow the pushers (1) to slide radially relative to the mobile sectors (4) on which the said pushers (1) are mounted.

5. Tyre-building drum according to one of Claims 1 to 4, in which each pusher (1) comprises a rod (11) sliding radially with respect to the mobile sector (4) on which the said pusher (1) is mounted, and of which the length in the radial direction is adjusted so that when the drum is brought to its first laying diameter, a first end of the rod comes into abutment against a cylindrical surface (9) of constant diameter and the other end pushes back the elastic sleeve (5) so that the radially external surface of the said sleeve (5) is at the same diameter as the laying diameter of the drum.

6. Tyre-building drum according to Claim 5, in which the part of the pusher supporting the elastic sleeve comprises axial projections (13) able to support the elastic sleeve (5).

7. Tyre-building drum according to Claim 6, in which the axial projections (13) have an axial length substantially equal to the width of the groove.

8. Tyre-building drum according to one of Claims 5 to 7, in which the lock (2) axially enters a housing (12) formed on the rod (11) of the pusher (1) so as to hold the said pusher (1) in the closed position.

9. Tyre-building drum according to one of Claims 1 to 8, further comprising a mechanism (46) able to alter the axial position of the mobile sectors (4) between two extreme positions.

10. Tyre-building drum according to Claim 9, in which the mobile sectors (4) reaching their end stops in each of the extreme axial positions causes the locks (2) to open or close respectively.

11. Tyre-building drum according to Claim 1 or 10, in which a ball-ended pusher (6), mounted in each of the mobile sectors (4), keeps the lock (2) mounted on the said sector (4) in the open or closed position so as to prevent the said lock (2) from moving axially relative to the rod (11) of the pusher (1) when the mobile sectors (4) are moving radially or axially.
